# EUROPÄISCHE PATENTSCHRIFT

(11) **EP 1 943 855 B1**
(45) Veröffentlichungstag und Bekanntmachung des Hinweises auf die Patenterteilung: **21.07.2010**
(21) Anmeldenummer: 06807632.2
(22) Anmeldetag: 27.10.2006
(51) Int. Cl.: H04W 12/06

(54) **VERFAHREN UND SERVER ZUM BEREITSTELLEN EINES MOBILITÄTSSCHLÜSSELS**
METHOD AND SERVER FOR PROVIDING A MOBILE KEY
SERVEUR ET PROCEDE POUR FOURNIR UNE CLE DE MOBILITE

(30) Priorität: 04.11.2005 DE 102005052718; 02.02.2006 DE 102006004868
(43) Veröffentlichungstag der Anmeldung: 16.07.2008
(73) Patentinhaber: SIEMENS AKTIENGESELLSCHAFT, 80333 München (DE)
(72) Erfinder: FALK, Rainer, 85386 Eching (DE); KRÖSELBERG, Dirk, 80469 München (DE); RIEGEL, Maximilian, 90409 Nürnberg (DE)
(86) Internationale Anmeldenummer: PCT/EP2006/067895
(87) Internationale Veröffentlichungsnummer: WO 2007/051768

(56) Entgegenhaltungen:
- WO-A-2007/011995
- MADJID NAKHJIRI NARAYANAN VENKITARAMAN MOTOROLA LABS: "EAP based Proxy Mobile IP key bootstrapping for WiMAX" IETF STANDARD-WORKING-DRAFT, INTERNET ENGINEERING TASK FORCE, IETF, CH, Januar 2005 (2005-01), XP015044434 ISSN: 0000-0004
- DAEHYON KIM ET AL: "Architecture for 3G and 802.16 Wireless Networks Integration with QoS Support" QUALITY OF SERVICE IN HETEROGENEOUS WIRED/WIRELESS NETWORKS, 2005. SECOND INTERNATIONAL CONFERENCE ON ORLANDO, FL, USA 22-24 AUG. 2005, PISCATAWAY, NJ, USA,IEEE, 22. August 2005 (2005-08-22), Seiten 28-28, XP010859418 ISBN: 0-7695-2423-0

## Beschreibung

Die Erfindung betrifft ein Verfahren und einen Authentisierungs-Proxy-Server zum Bereitstellen eines Mobilitätsschlüssels zur kryptographischen Sicherung von Mobilitätssignalisierungsnach-, richten für einen Heimagenten eines Mobilfunknetzes.

Das Internet mit dem TCP/IP-Protokoll bietet eine Plattform für die Entwicklung höherer Protokolle für den mobilen Bereich. Da die Internet-Protokolle weit verbreitet sind, kann mit entsprechenden Protokollerweiterungen für mobile Umgebungen ein großer Anwenderkreis erschlossen werden. Die herkömmlichen .Internet-Protokolle sind jedoch ursprünglich nicht für den mobilen Einsatz konzipiert. In der Paketvermittlung des herkömmlichen Internets werden die Pakete zwischen stationären Rechnern ausgetauscht, die weder ihre Netzwerkadresse ändern noch zwischen verschiedenen Subnetzen wandern. Bei Funknetzen mit mobilen Rechnern, werden mobile Rechner MS häufig in verschiedene Netzwerke eingebunden. Das DHCP (Dynamic Host Configuration Protocol) ermöglicht mit Hilfe eines entsprechenden Servers die dynamische Zuweisung einer IP-Adresse und weitere Kohfigurationsparameter an einen Rechner in einem Netzwerk. Ein Rechner, der in ein Netzwerk eingebunden wird, bekommt automatisch eine freie IP-Adresse durch das DHCP-Protokoll zugewiesen. Hat ein mobiler Rechner DHCP installiert, muss er lediglich in Rechweite eines lokalen Netzwerkes kommen, das die Konfiguration über das DHCP-Protokoll unterstützt. Bei dem DHCP-Protokoll ist eine dynamische Adressvergabe möglich, d.h. eine freie IP-Adresse wird automatisch für eine bestimmte Zeit zugeteilt. Nach Ablauf dieser Zeit muss die Anfrage durch den mobilen Rechner entweder erneut gestellt werden oder die IP-Adresse kann anderweitig vergeben werden.

Mit DHCP kann ein mobiler Rechner ohne manuelle Konfiguration in ein Netzwerk eingebunden werden. Als Voraussetzung muss lediglich ein DHCP-Server zur Verfügung stehen. Ein mobiler Rechner kann so Dienste des lokalen Netzwerkes benutzen und beispielsweise zentral abgelegte Dateien benutzen. Bietet ein mobiler Rechner jedoch selbst Dienste an, kann ein potentieller Dienstnutzer den mobilen Rechner nicht auffinden, da sich dessen IP-Adresse in jedem Netzwerk, in das der mobile Rechner eingebunden wird, ändert. Das gleiche geschieht, wenn sich eine IP-Adresse während einer bestehenden TCP-Verbindung ändert. Dies führt zum Abbruch der Verbindung. Daher bekommt bei Mobile-IP ein mobiler Rechner eine IP-Adresse zugewiesen, die er auch in einem anderen Netzwerk behält. Bei herkömmlichem IP-Netzwechsel ist es nötig, die IP Adressen-Einstellungen entsprechend anzupassen. Eine ständige Anpassung von IP- und Routing-Konfigurationen auf dem Endgerät ist jedoch manuell fast unmöglich. Bei den herkömmlichen automatischen Konfigurationsmechanismen wird die bestehende Verbindung bei einem Wechsel der IP-Adresse unterbrochen. Das MIP-Protokoll (RFC 2002, RFC 2977, RFC3344, RFC3846, RFC3957, RFC3775, RFC3776, RFC4285) unterstützt die Mobilität von mobilen Endgeräten. Bei den herkömmlichen IP-Protokollen muss das mobile Endgerät jedes Mal seine IP-Adresse anpassen, wenn es das IP-Subnetz wechselt, damit die an das mobile Endgerät adressierten Datenpakete richtig geroutet werden. Um eine bestehende TCP-Verbindung aufrecht zu erhalten, muss das mobile Endgerät seine IP-Adresse beibehalten, da ein Adressenwechsel zu einer Unterbrechung der Verbindung führt. Das MIP-Protokoll hebt diesen Konflikt auf, indem es einem mobilen Endgerät bzw. einem Mobile Node (MN) erlaubt, zwei IP-Adressen zu besitzen. Das MIP-Protokoll ermöglicht eine transparente Verbindung zwischen den beiden Adressen, nämlich einer permanenten Home-Adresse und einer zweiten temporären Care-Of-Adresse. Die Care-Of-Adresse ist die IP-Adresse, unter der das mobile Endgerät aktuell erreichbar ist.

Ein Heimagent (Home Agent) ist ein Stellvertreter des mobilen Endgerätes, solange sich das mobile Endgerät nicht in dem ursprünglichen Heimnetz aufhält. Der Heimagent ist ständig über den aktuellen Aufenthaltsort des mobilen Rechners informiert. Der Heimagent stellt üblicherweise eine Komponente eines Routers im Heimnetz des mobilen Endgerätes dar. Wenn das mobile Endgerät sich außerhalb des Heimnetzes befindet, stellt der Heimagent eine Funktion bereit, damit sich das mobile Endgerät anmelden kann. Dann leitet der Heimagent die an das mobile Endgerät adressierten Datenpakete in das aktuelle Subnetz des mobilen Endgerätes weiter.

Ein Fremdagent (Foreign Agent) befindet sich in dem Subnetz, in dem sich das mobile Endgerät bewegt. Der Fremdagent leitet eingehende Datenpakete an das mobile Endgerät bzw. an den mobilen Rechner weiter. Der Fremdagent befindet sich in einem so genannten Fremdnetz (Visited Network). Der Fremdagent stellt ebenfalls üblicherweise eine Komponente eines Routers dar. Der Fremdagent routet alle administrativen Mobile-Datenpakete zwischen dem mobilen Endgerät und dessen Heimagenten. Der Fremdagent entpackt die von dem Heimagent gesendeten, getunnelten IP-Datenpakete und leitet deren Daten an das mobile Endgerät weiter.

Die Heimadresse des mobilen Endgerätes ist die Adresse, unter der das mobile Endgerät permanent erreichbar ist. Die Heimadresse hat dasselbe Adressenpräfix wie der Heimagent. Die Care-Of-Adresse ist diejenige IP-Adresse, die das mobile Endgerät in dem fremden Netz verwendet.

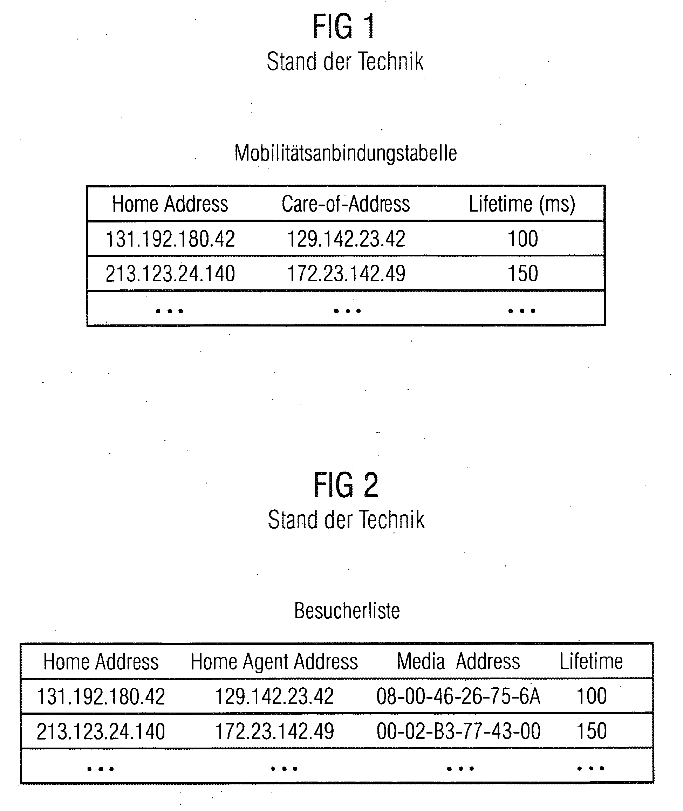

Der Heimagent pflegt eine so genannte Mobilitätsanbindungstabelle (MBT: Mobility Binding Table). Die Einträge in dieser Tabelle dienen dazu, die beiden Adressen, d.h. die Heimadresse und die Care-Of-Adresse, eines mobilen Endgeräts einander zuzuordnen und die Datenpakete entsprechend umzuleiten. Die MBT-Tabelle enthält Einträge über die Heimadresse, die Care-Of-Adresse und eine Angabe über die Zeitspanne, in der diese Zuordnung gültig ist (Life Time). Figur 1 zeigt ein Beispiel für eine Mobilitätsanbindungstabelle nach dem Stand der Technik.

Der Fremdagent (FA) enthält eine Besucherliste bzw. Visitor List (VL: Visitor List), die Informationen über die mobilen Endgeräte enthält, die sich gerade in dem IP-Netz des Fremdagenten befinden. Figur 2 zeigt ein Beispiel für eine derartige Besucherliste nach dem Stand der Technik.

Damit ein mobiler Rechner in ein Netz eingebunden werden kann, muss er zunächst in Erfahrung bringen, ob er sich in seinem Heim- oder einem Fremdnetz befindet. Zusätzlich muss das mobile Endgerät in Erfahrung bringen, welcher Rechner in dem Subnetz der Heim- bzw. der Fremdagent ist. Diese Informationen werden durch so genanntes Agent Discovery ermittelt.

Durch die nachfolgende Registrierung kann das mobile Endgerät seinen aktuellen Standort seinem Heimagenten mitteilen. Hierzu sendet der mobile Rechner bzw. das mobile Endgerät dem Heimagenten die aktuelle Care-Of-Adresse zu. Zur Registrierung sendet der mobile Rechner einen. Registration-Request bzw. eine Registrierungsanforderung an den Heimagenten. Der Heimagent (HA) trägt die Care-Of-Adresse in seine Liste ein und antwortet mit einem Registration Reply bzw. einer Registrierungsantwort. Hierbei besteht allerdings ein Sicherheitsproblem. Da prinzipiell jeder Rechner an einen Heimagenten eine Registrierungsanforderung schicken kann, könnte man auf einfache Weise einem Heimagenten vorspiegeln, ein Rechner habe sich in ein anderes Netzwerk bewegt. So könnte ein fremder Rechner alle Datenpakete eines mobilen Rechners bzw. mobilen Endgerätes übernehmen, ohne dass ein Sender davon erfährt. Um dies zu verhindern, verfügen der mobile Rechner und der Heimagent über gemeinsame geheime Schlüssel. Kehrt ein mobiler Rechner in sein Heimatnetzwerk zurück, deregistriert er sich beim Heimagenten, da der mobile Rechner nunmehr alle Datenpakete selbst entgegennehmen kann. Ein mobiles Funknetz muss unter Anderem folgende Sicherheitseigenschaften aufweisen. Informationen dürfen nur für gewünschte Kommunikationspartner zugänglich gemacht werden, d.h. nicht gewünschte Mithörer dürfen keinen Zugriff auf übertragene Daten erhalten. Das mobile Funknetz muss also die Eigenschaft der Vertraulichkeit (Confidentiality) aufweisen. Daneben muss Authentizität gegeben sein. Die Authentizität (Authenticity) erlaubt es einem Kommunikationspartner zweifelsfrei festzustellen, ob eine Kommunikation tatsächlich zu einem gewünschten Kommunikationspartner aufgebaut wurde oder ob sich eine fremde Partei als Kommunikationspartner ausgibt. Authentifizierungen können pro Nachricht oder pro Verbindung durchgeführt werden. Wird auf Basis von Verbindungen authentifiziert, wird nur einmal zu Anfang einer Sitzung (Session) der Kommunikationspartner identifiziert. Man geht dann für den weiteren Verlauf der Sitzung davon aus, dass die folgenden Nachrichten weiterhin von dem entsprechenden Sender stammen. Selbst wenn die Identität eines Kommunikationspartners feststeht, d.h. der Kommunikationspartner authentifiziert ist, kann der Fall auftreten, dass dieser Kommunikationspartner nicht auf alle Ressourcen zugreifen darf bzw. nicht alle Dienste über das Netzwerk benutzen darf. Eine entsprechende Autorisation setzt in diesem Fall eine vorhergehende Authentifizierung des Kommunikationspartner voraus.

Bei mobilen Datennetzen müssen Nachrichten längere Strecken über Luftschnittstellen zurücklegen und sind somit für potentielle Angreifer leicht erreichbar: Bei mobilen und drahtlosen Datennetzen spielen daher Sicherheitsaspekte eine besondere Rolle. Ein wesentliches Mittel zur Erhöhung der Sicherheit in Datennetzwerken stellen Verschlüsselungstechniken dar. Durch die Verschlüsselung ist es möglich, Daten über unsichere Kommunikationswege, beispielsweise über Luftschnittstellen übertragen, ohne dass unbefugte Dritte Zugriff auf die Daten erlangen. Zum Verschlüsseln werden die Daten, d.h. der so genannte Klartext mit Hilfe eines Verschlüsselungsalgorithmus in Chiffre-Text transformiert. Der verschlüsselte Text kann über den unsicheren Datenübertragungskanal transportiert und anschließend entschlüsselt bzw. dechiffriert werden.

Als eine viel versprechende drahtlose Zugangstechnologie wird WiMax (Worldwide Interoperability for Microwafe Access) als neuer Standard vorgeschlagen, der für die Funkübertragung IEEE 802.16 verwendet. Mit WiMax sollen mit Sendestationen ein Bereich von bis zu 50km mit Datenraten von über 100 Mbit pro Sekunde versorgt werden.

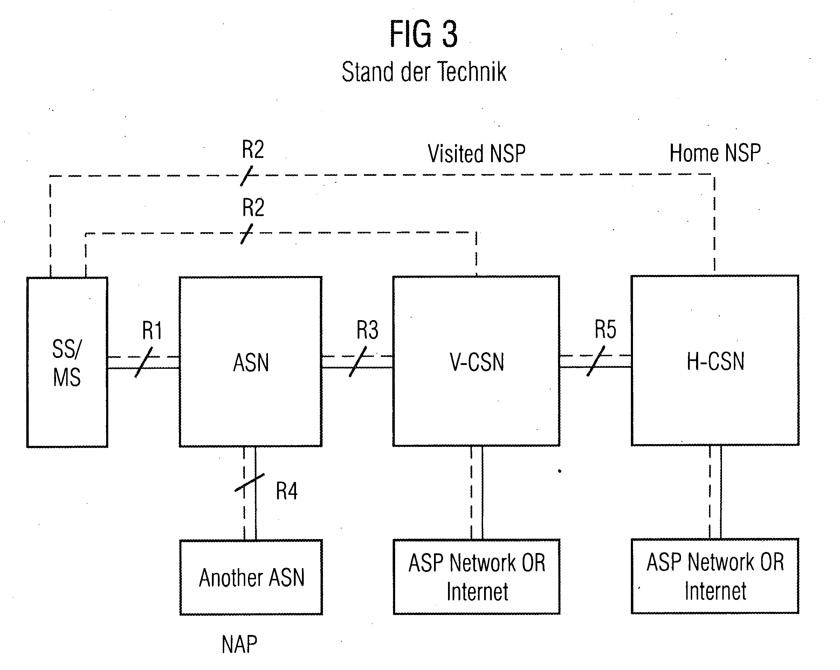

Figur 3 zeigt ein Referenzmodel für ein WiMax-Funknetzwerk. Ein mobiles Endgerät MS befindet sich im Bereich eines Zugangsnetzwerkes (ASN: Access Serving Network). Das Zugangsnetz ASN ist über mindestens ein besuchtes Netz (Visited Connectivity Service Network VCSN) bzw. Zwischennetz mit einem Heimnetz HCSN (Home Connectivity Service Network) verbunden. Die verschiedenen Netzwerke sind über Schnittstellen bzw. Referenzpunkte R miteinander verbunden. Der Heimagent HA der Mobilstation MS befindet sich in dem Heimnetz HCSN oder in einem der besuchten Netze VCSN.

WiMax unterstützt zwei Realisierungsvarianten von Mobile IP, so genanntes Client MIP (CMIP), bei dem die Mobilstation selbst die MIP-Clientfunktion realisiert, und Proxy-MIP (PMIP), bei dem die MIP-Client-Funktion durch das WiMax-Zugangsnetz realisiert ist. Die dazu im ASN vorgesehene Funktionalität wird als Proxy Mobile Node (PMN) oder als PMIP-Client bezeichnet. Dadurch kann MIP auch mit Mobilstationen verwendet werden, die selbst kein MIP unterstützen.

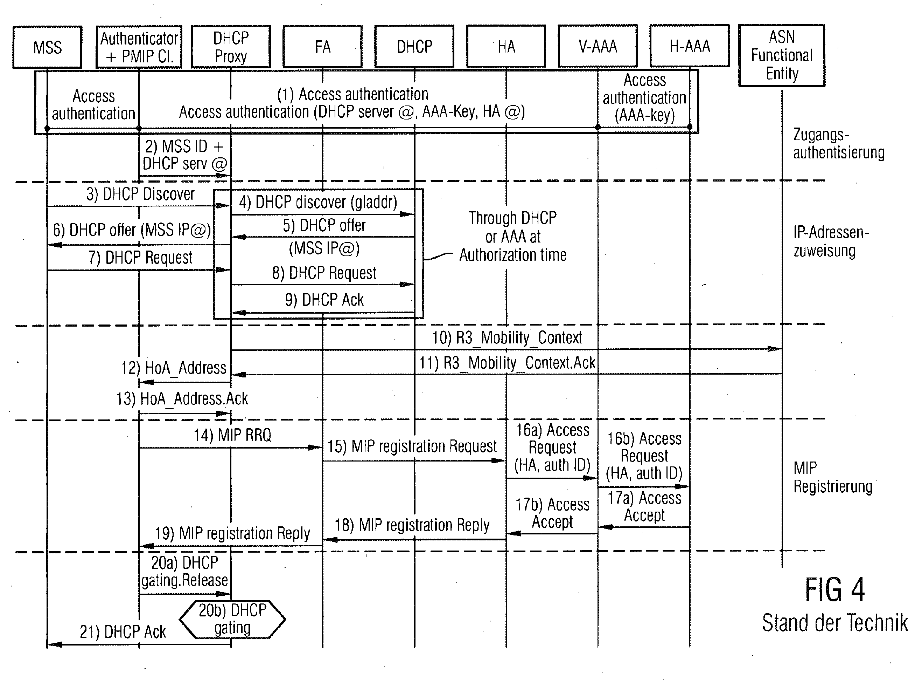

Figur 4 zeigt den Verbindungsaufbau bei Proxy-MIP, wenn sich der Heimagent in dem besuchten Netzwerk befindet nach dem Stand der Technik.

Nach Aufbau einer Funkverbindung zwischen dem mobilen Endgerät und einer Basisstation erfolgt zunächst eine Zugangsauthentisierung. Die Funktion der Authentisierung, der Autorisation und der Buchhaltung erfolgt mittels so genannter AAA-Servern (AAA: Authentication Authorization and Accounting). Zwischen dem mobilen Endgerät MS und dem AAA-Server des Heimnetzes (HAAA) werden Authentisierungsnachrichten ausgetauscht mittels der die Adresse des Heimagenten und ein Authentisierungsschlüssel gewonnen werden. Der Authentisierungsserver im Heimnetz enthält die Profildaten des Teilnehmers. Der AAA-Server erhält eine Authentisierungsanfragenachricht, die eine Teilnehmeridentität des mobilen Endgerätes enthält. Der AAA-Server generiert nach erfolgreicher Zugangsauthentisierung einen MSK-Schlüssel (MSK: Master Session Key) zum Schutz der Datenübertragungsstrecke zwischen dem mobilen Endgerät MS und der Basisstation des Zugangsnetzwerkes ASN. Dieser MSK-Schlüssel wird von dem AAA-Server des Heimnetzes über das Zwischennetz CSN an das Zugangsnetzwerk ASN übertragen.

Nach der Zugangsauthentisierung wird, wie in Figur 4 zu sehen, der DHCP-Proxy-Server im Zugangsnetzwerk ASN konfiguriert. Falls die IP-Adresse und Host-Konfiguration bereits in der AAA-Antwortnachricht enthalten ist, wird die gesamte Information in den DHCP-Proxy-Server heruntergeladen.

Nach erfolgreicher Authentisierung und Autorisierung sendet die Mobilstation bzw. das mobile Endgerät MS eine DHCP Discovery Nachricht und es erfolgt eine IP-Adressenzuweisung.

Falls das Zugangsnetzwerk ASN sowohl PMIP als auch CMIP Mobilität unterstützt, informiert der Fremdagent die ASN-Handover Funktion, indem es eine R3-Mobilitätskontextnachricht sendet. Bei Netzwerken, die nur PMIP unterstützen kann hierauf verzichtet werden. Nachdem die Heimadresse ausgelesen worden ist, wird diese an den PMIP-Client weitergeleitet.

Anschließend erfolgt eine MIP-Registrierung. Bei der Registrierung wird der Heimagent über den aktuellen Standort des mobilen Endgerätes informiert. Zur Registrierung sendet der mobile Rechner die Registrierungsanforderung an den Heimagenten, die die aktuelle Care-Of-Adresse enthält. Der Heimagent trägt die Care-Of-Adresse in eine von ihm verwaltete Liste ein und antwortet mit einer Registrierungsantwort (Registration Reply). Da prinzipiell jeder Rechner an einen Heimagenten Registrierungsanforderungen schicken kann, könnte auf einfache Weise einem Heimagenten vorgespielt werden, ein Rechner habe sich in ein anderes Netzwerk bewegt. Um dies zu verhindern verfügen sowohl der mobile Rechner als auch der Heimagent über einen gemeinsamen geheimen Schlüssel, nämlich einen MIP-Schlüssel. Falls der Heim-Agent (HA) den MIP-Schlüssel nicht kennt, richtet er ihn ein, wozu er mit einem Heim-AAA-Server kommuniziert.

Nach Abschluss des in Figur 4 dargestellten Verbindungsaufbaus hat das mobile Endgerät eine Heimadresse erhalten und ist bei dem Heimatagenten registriert.

Der in Figur 4 dargestellte Verbindungsaufbau ist allerdings nicht möglich, wenn der Heim-AAA-Server nicht die vom WiMax-Protokoll erwarteten Attribute bzw. Daten liefert. Handelt es sich beispielsweise bei dem Heim-AAA-Server um einen 3GPP-Server oder einen sonstigen AAA-Server, der nicht WiMax-Interworking unterstützt, so ist dieser nicht in der Lage, die für die MIP-Registrierung notwendigen Datenattribute, insbesondere die Heimadresse und einen kryptographischen Schlüssel zur Verfügung zu stellen. Der Heimagent HA erhält somit keinen MIP-Schlüssel (MSK: Master Session Key) und lehnt den Teilnehmer ab.

Ein Verfahren zur Bereitstellung eines Mobilitätsschlüssels ist bekannt aus dem Dokument. NAKHJIRI Madjid, EAP based Proxy Mobile IP key bootstrapping for WIMAX, Internet Draft, Januar 2005.

Es ist daher die Aufgabe der vorliegenden Erfindung, ein Verfahren zum Bereitstellen eines Mobilitätsschlüssels für ein Mobilfunknetz zu schaffen, bei dem der Authentisierungsserver des Heimnetzes keine MIP-Registrierung unterstützt.

Diese Aufgabe wird erfindungsgemäß durch ein Verfahren mit den in Patentanspruch 1 angegebenen Merkmalen gelöst.

Die Erfindung schafft ein Verfahren zum Bereitstellen mindestens eines Mobilitätsschlüssels zur kryptographischen Sicherung von Mobilitätssignalisierungsnachrichten für einen Heimagenten mit den folgenden Schritten, nämlich:
- Aufbauen einer Funkverbindung zwischen einem mobilen Teilnehmer-Endgerät und einem Zugangsnetz,
   wobei ein Authentisierungs-Proxy-Server eines Zwischennetzes zur Authentisierung eines Teilnehmers mindestens eine Authentisierungsnachricht, die eine Teilnehmeridentität enthält, zwischen dem Zugangsnetz und einem Heimnetz des Teilnehmers weiterleitet und bei erfolgreicher Authentisierung durch einen Authentisierungsserver des Heimnetzes die Teilnehmeridentität jeweils speichert;
- Empfangen einer von einem mobilen Teilnehmerendgerät stammenden Registrierungsanfragenachricht, die eine Teilnehmeridentität enthält, durch einen Heimagenten;
- Senden einer Schlüsselanfragenachricht für einen Mobilitätsschlüssel von dem Heimagenten an den zugehörigen Authentisierungs-Proxy-Server;
   wobei die Schlüsselanfragenachricht die in.der Registrierungsanfragenachricht enthaltene Teilnehmeridentität enthält; und
- Bereitstellen eines Mobilitätsschlüssels durch den Authentisierungs-Proxy-Server für den Heimagenten, wenn die in der Schlüsselanfragenachricht enthaltene Teilnehmeridentität mit einer der durch den Authentisierungs-Proxy-Server gespeicherten Teilnehmeridentitäten übereinstimmt.

Bei einer bevorzugten Ausführungsform des erfindungsgemäßen Verfahrens wird der Mobilitätsschlüssel durch den Authentisierungs-Proxy-Server zufällig generiert.

Bei einer bevorzugten Ausführungsform des erfindungsgemäßen Verfahrens überträgt der Authentisierungsserver des Heimnetzes bei erfolgreicher Authentisierung einen in einer Authentisierungsnachricht enthaltenen MSK-Schlüssel über den Authentisierungs-Proxy-Server zu einem Authentisierungs-Client des Zugangsnetzes.

Bei einer alternativen Ausführungsform des erfindungsgemäßen Verfahrens wird der Mobilitätsschlüssel durch den Authentisierungs-Proxy-Server nicht zufällig generiert, sondern durch den Authentisierungs-Proxy-Server aus dem übertragenen MSK-Schlüssel abgeleitet.

Bei einer Ausführungsform des erfindungsgemäßen Verfahrens bildet der Mobilitätsschlüssel einen Teil des übertragenen MSK-Schlüssels.

Bei einer alternativen Ausführungsform des erfindungsgemäßen Verfahrens ist der Mobilitätsschlüssel mit dem übertragenen MSK-Schlüssel identisch.

Bei einer Ausführungsform des erfindungsgemäßen Verfahrens werden die Authentisierungsnachrichten nach einem Radius-Datenübertragungsprotokoll übertragen.

Bei einer alternativen Ausführungsform des erfindungsgemäßen Verfahrens werden die Authentisierungsnachrichten nach einem Diameter-Datenübertragungsprotokoll übertragen.

Bei einer bevorzugten Ausführungsform des erfindungsgemäßen Verfahrens wird das Zugangsnetz durch ein WiMax-Zugangsnetz ASN gebildet.

Bei einer bevorzugten Ausführungsform des erfindungsgemäßen Verfahrens wird das Zwischennetz durch ein WiMax-Zwischennetz CSN gebildet.

Bei einer ersten Ausführungsform des erfindungsgemäßen Verfahrens ist das Heimnetz ein 3GPP-Netz.

Bei einer alternativen Ausführungsform des erfindungsgemäßen Verfahrens wird das Heimnetz durch ein Netz gebildet, welches eine AAA-Infrastruktur für WLAN-Teilnehmer bereitstellt (WLAN-Netz).

Bei einer bevorzugten Ausführungsform des erfindungsgemäßen Verfahrens wird die Teilnehmeridentität durch einen Netzwerkzugangsidentifizierer NAI (Network Access Identifier) gebildet.

Bei einer alternativen Ausführungsform des erfindungsgemäßen Verfahrens wird die Teilnehmeridentität durch eine Heimadresse des Teilnehmers gebildet.

Bei einer bevorzugten Ausführungsform des erfindungsgemäßen Verfahrens wird der Mobilitätsschlüssel zusätzlich einem PMIP-Client des Zugangsnetzes bereitgestellt.

Bei einer bevorzugten Ausführungsform des erfindungsgemäßen Verfahrens liegen mehrere Zwischennetze zwischen dem Zugangsnetz und dem Heimnetz.

Bei einer ersten Ausführungsform des erfindungsgemäßen Verfahrens befindet sich der Heimagent in dem Heimnetz.

Bei einer alternativen Ausführungsform des erfindungsgemäßen Verfahrens befindet sich der Heimagent in einem der Zwischennetze.

Bei einer ersten Ausführungsform des erfindungsgemäßen Verfahrens ist der Authentisierungs-Proxy-Server in dem Heimnetz vorgesehen.

Bei einer alternativen Ausführungsform des erfindungsgemäßen Verfahrens ist der Authentisierungs-Proxy-Server in einem der Zwischennetze vorgesehen.

Die Erfindung schafft ferner einen Authentisierungs-Proxy-Server zum Bereitstellen eines Mobilitätsschlüssels für eine kryptographische Sicherung von Mobilitätssignalisierungsnachrichten, wobei der Authentisierungs-Proxy-Server nach erfolgreicher Authentisierung eines Teilnehmers jeweils dessen Teilnehmeridentität speichert und nach dem Empfang einer Schlüsselanfragenachricht für einen Mobilitätsschlüssel von einem Heimagenten einen Mobilitätsschlüssel bereitstellt, wenn eine in der Schlüsselanfragenachricht enthaltene Teilnehmeridentität mit einer der gespeicherten Teilnehmeridentitäten übereinstimmt.

Im Weiteren werden bevorzugte Ausführungsformen des erfindungsgemäßen Verfahrens und des erfindungsgemäßen Authentisierungs-Proxy-Servers unter Bezugnahme auf die beigefügten Figuren zur Erläuterung erfindungswesentlicher Merkmale beschrieben. Es zeigen:
- Figur 1: ein Beispiel für eine Mobilitätsanbindungstabelle nach dem Stand der Technik;
- Figur 2: ein Beispiel für eine Besucherliste nach dem Stand der Technik;
- Figur 3: eine Referenznetzwerkstruktur für ein WiMax- Funknetz;
- Figur 4: einen Verbindungsaufbau bei einem herkömmlichen WiMax-Netz nach dem Stand der Technik;
- Figur 5: eine Netzstruktur gemäß einer bevorzugten Ausfüh- rungsform des erfindungsgemäßen Verfahrens;
- Figur 6: ein Ablaufdiagramm zur Erläuterung der Funktions- weise des erfindungsgemäßen Verfahrens;
- Figur 7: ein weiteres Ablaufdiagramm zur Erläuterung der Funktionsweise des erfindungsgemäßen Verfahrens;
- Figur 8: ein Diagramm zur Erläuterung der Funktionsweise des erfindungsgemäßen Verfahrens.

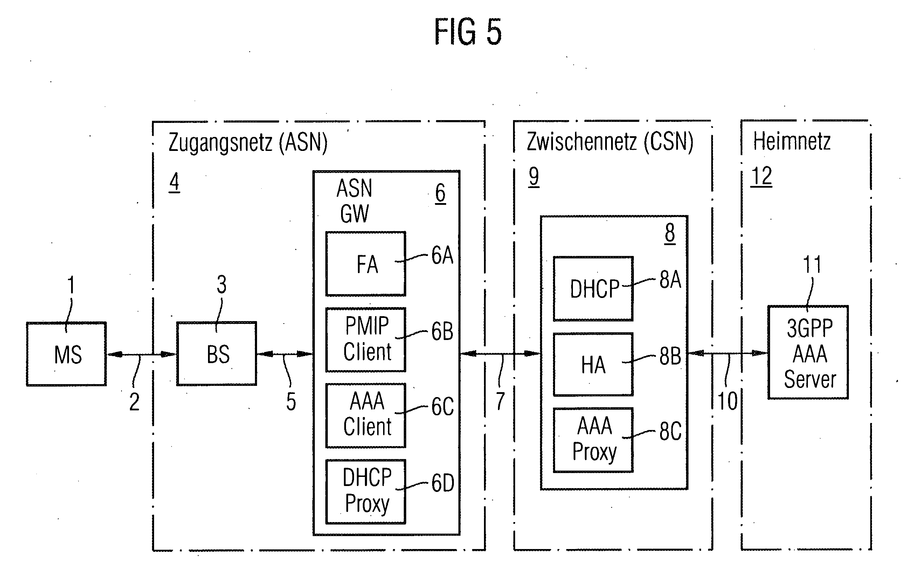

Wie man aus Figur 5 erkennen kann ist ein mobiles Endgerät 1 über eine drahtlose Schnittstelle 2 mit einer Basisstation 3 eines Zugangsnetzes 4 verbunden. Bei dem mobilen Endgerät 1 handelt es sich um ein beliebiges mobiles Endgerät, beispielsweise einen Laptop, einen PDA, ein Mobiltelefon, oder ein sonstiges mobiles Endgerät. Die Basisstation 3 des Zugangsnetzes 4 ist über eine Datenübertragungsleitung 5 mit einem Zugangsnetzwerk-Gateway 6 verbunden. In dem Zugangs-Gateway-Rechner 6 sind vorzugsweise weitere Funktionalitäten integriert, insbesondere ein Fremdagent 6A, ein PMIP-Client 6B, ein AAA-Client-Server 6C und ein DHCP-Proxy-Server 6D. Der Fremdagent 6A ist ein Router, der Routing-Dienste für das mobile Endgerät 1 zur Verfügung stellt. Die an das mobile Endgerät 1 gerichteten Datenpakete werden getunnelt übertragen und von dem Fremdagenten 6A entpackt.

Das Gateway 6 des Zugangsnetzes 4 ist über eine Schnittstelle 7 mit einem Rechner 8 eines Zwischennetzes 9 verbunden. Der Rechner 8 enthält einen DHCP-Server 8A, einen Heimagenten 8B und einen AAA-Proxy-Server 8C. Der Heimagent 8B ist der Stellvertreter des mobilen Endgerätes 1, wenn dieses sich nicht in seinem ursprünglichen Heimnetz befindet. Der Heimagent 8B ist ständig über den aktuellen Aufenthaltsort des mobilen Rechners informiert. Datenpakete für das mobile Endgerät 1 werden zunächst an dem Heimagenten übertragen und von dem Heimagenten aus getunnelt an den Fremdagenten 6A weitergeleitet. Umgekehrt können Datenpakete, die von dem mobilen Endgerät 1 ausgesendet werden, direkt an den jeweiligen Kommunikationspartner gesendet werden. Die Datenpakete des mobilen Endgerätes 1 enthalten dabei die Heimadresse als Absenderadresse. Die Heimadresse hat dasselbe Adresspräfix, d.h. Netzadresse und Subnetzadresse, wie der Heimagent 8B. Datenpakete, die an die Heimadresse des mobilen Endgerätes 1 gesendet werden, werden von dem Heimagenten 8B abgefangen und getunnelt von dem Heimagenten 8B an die Care-of-Adresse des mobilen Endgerätes 1 übertragen und schließlich an dem Endpunkt des Tunnels, d.h. durch den Fremdagenten 6A oder das mobile Endgerät selbst empfangen.

Der Rechner 8 des Zwischennetzes 9 ist über eine weitere Schnittstelle 10 mit einem Authentisierungsserver 11 eines Heimnetzes 12 verbunden. Bei dem Heimnetz handelt es sich beispielsweise um ein 3GPP-Netz für UMTS. Bei einer alternativen Ausführungsform handelt sich bei dem Server 11 um einen Authentisierungsserver eines WLAN-Netzes. Der in Figur 5 dargestellte Authentisierungsserver 11 unterstützt keine MIP-Registrierung.

Sobald der AAA-Proxy-Server 8C des Rechners 8 erkennt, dass der AAA-Server 11 des Heimnetzes 12 kein MIP (CMIP/PMIP) unterstützt, erfolgt die Bereitstellung eines Mobilitätsschlüssels zur kryptographischen Sicherung von Mobilitätssignalisierungsnachrichten für den Heimagenten 8B gemäß dem erfindungsgemäßen Verfahren. Der AAA-Proxy-Server 8B erkennt die fehlende CMIP/PMIP-Unterstützung beispielsweise daran, dass keine MIP-Attribute von dem Server 11 des Heimnetzes 12 auf seine Anfrage hin geliefert werden. Zur kryptographischen Sicherung von Mobilitätssignalisierungsnächrichten wird ein gemeinsamer. Mobilitätsschlüssel (MIP-Schlüssel) für den Heimagenten 8B und das mobile Endgerät 1 für den PMIP-Fall bzw. ein gemeinsamer Mobilitätsschlüssel für den Heimagenten 8B und einen PMIP-Client 6B für den PMIP-Fall benötigt. Ist das Heimnetz 12 WiMax-Interworking-fähig erhält der Heimagent 8B diesen MIP-Schlüssel von dem AAA-Server des Heimnetzes 12. Ist allerdings, wie in Figur 5 dargestellt, der AAA-Server 11 nicht in der Lage, auf die entsprechende Anfrage des Heimagenten 8B die benötigten MIP-Attribute zur Verfügung zu stellen, wird das erfindungsgemäße Verfahren aktiviert. Der 3GPP-AAA-Server 11, wie er in Figur 5 dargestellt ist, kann, da er die Anfrage des Heimagenten 8B nicht interpretieren kann, keinen entsprechenden kryptographischen Schlüssel zur Sicherung von Mobilitätssignalisierungsnachrichten bereitstellen. Bei dem erfindungsgemäßen Verfahren wird der nicht WiMax-fähige Authentisierungsserver 11 des Heimnetzes 12 unverändert gelassen und der Mobilitätsschlüssel wird durch den AAA-Proxy-Server 8C dem Heimagenten 8B bereitgestellt. Nachdem erkannt worden ist, dass der Authentisierungsserver 11 des Heimnetzes 12 keinen Mobilitätsschlüssel bereitstellt, wird eine so genannte Proxy-Home-MIP-Funktionalität aktiviert und für diese AAA-Session ein lokaler Datensatz von dem Authentisierungs-Proxy-Server 8C angelegt. Die für PMIP/CMIP erforderliche Funktionalität wird also erfindungsgemäß nicht von dem Authentisierungsserver 11 des Heimnetzes 12 zur Verfügung gestellt, sondern durch den AAA-Proxy-Server des Zwischennetzes 9, der in Kommunikationspfad zwischen dem Authentisierungsserver 11 des 3GPP-Netzes und dem Gateway 6 des Zugangsnetzes 4 liegt.

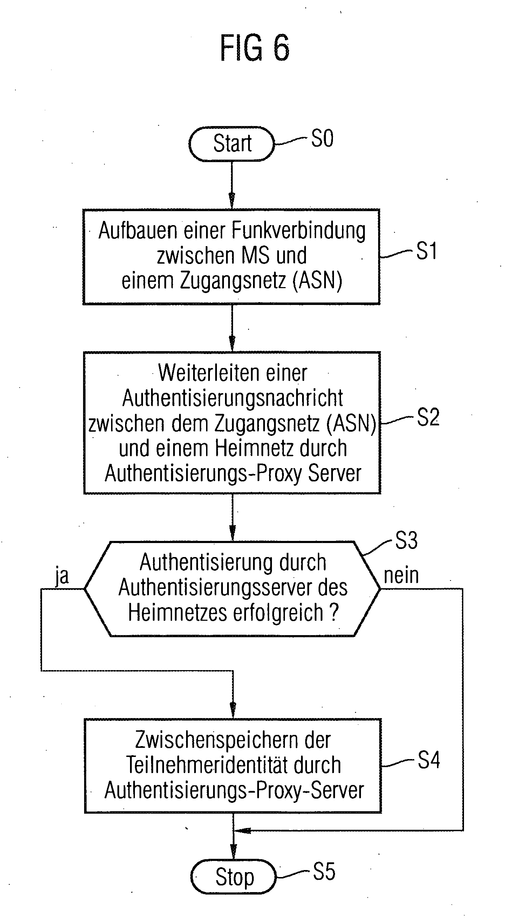

Figur 6 zeigt ein Ablaufdiagramm zur Authentisierung eines mobilen Endgerätes 1 bei einer Ausführungsform des erfindungsgemäßen Verfahrens.

Nach einem Startschritt S0 wird in einem Schritt S1 zunächst eine Funkverbindung zwischen dem mobilen Endgerät 1 und einer Basisstation 3 des Zugangsnetzes 4 im Schritt S1 aufgebaut. Anschließend werden im Schritt S2 Authentisierungsnachrichten zwischen dem Zugangsnetz 4 und dem Heimnetz 12 durch den Authentisierungs-Proxy-Server 8C des Zwischennetzes 9 weitergeleitet. Die Authentisierungsnachrichten enthalten eine Teilnehmeridentität zur Identifizierung des jeweiligen mobilen Endgerätes 1. Bei der Teilnehmeridentität handelt es sich beispielsweise um einen Netzwerkzugangsidentifizierer NAI. Alternativ wird die Teilnehmeridentität beispielsweise durch eine Heimadresse des mobilen Endgerätes 1 gebildet. Die von dem AAA-Proxy-Server 8C weitergeleiteten Authentisierungsnachrichten gelangen zu dem Authentisierungsserver 11 des Heimnetzes 12. Der Authentisierungsserver 11 des Heimnetzes 12 führt dann die Authentisierung des Teilnehmers durch. Ist die Authentisierung erfolgreich, sendet der Authentisierungsserver 11 eine entsprechende Nachricht über den Authentisierungs-Proxy-Server 8C des Zwischennetzes 9 an das Zugangsnetz 4. Im Schritt S3 prüft der Authentisierungs-Proxy-Server 8C des Zwischennetzes 9, ob die Authentisierung durch den Authentisierungsserver 11 des Heimnetzes 12 erfolgreich abgeschlossen wurde. Dies erkennt er beispielsweise an einer entsprechenden Erfolgs-Meldung (Success-Meldung) des Authentisierungsservers 11. Erkennt der Authentisierungs-Proxy-Server 8C anhand der von dem Heimnetz 12 an das Zugangsnetz 4 übertragenen Nachrichten, dass die Authentisierung eines Teilnehmers erfolgreich abgeschlossen worden ist, wird durch den Authentisierungs-Proxy-Server 8C im Schritt S4 die entsprechende Teilnehmeridentität extrahiert und zwischengespeichert.

Der Vorgang endet im Schritt S5. Der AAA-Proxy-Server 8C speichert somit alle Teilnehmeridentitäten von Teilnehmern bzw. mobilen Endgeräten 1, deren Authentisierung erfolgreich abgeschlossen worden ist.

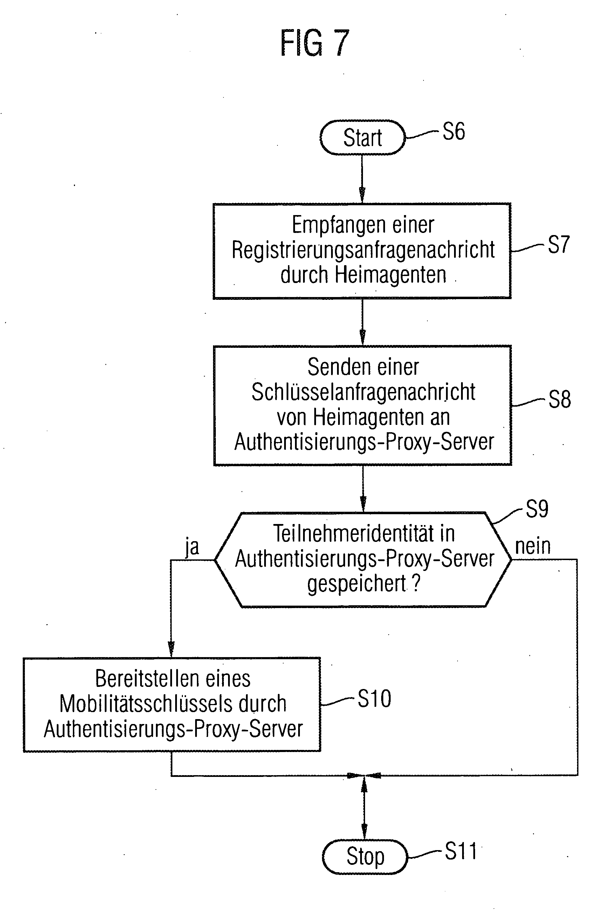

Wie man aus Figur 7 erkennen kann, wenn nach einem Startschritt S6 der Heimagent 8B zu einem späteren Zeitpunkt eine Registrierungsanfragenachricht erhält, sendet der Heimagent 8B im Schritt S8 eine entsprechende Schlüsselanfragenachricht an seinen Authentisierungs-Proxy-Server 8C. In der erhaltenen Registrierungsanfragenachricht ist eine Teilnehmeridentität eines mobilen Endgerätes 1 enthalten. Die entsprechende daraufhin generierte Schlüsselanfragenachricht des Heimagenten 8B an den Authentisierungs-Proxy-Server 8C enthält ebenfalls diese Teilnehmeridentität. Der Authentisierungs-Proxy-Server 8C prüft im Schritt S9, ob die in der Schlüsselanfragenachricht enthaltene Teilnehmeridentität mit einer der von ihm im Schritt S4 gespeicherten Teilnehmeridentitäten übereinstimmt. Sofern dies der Fall ist, stellt der Authentisierungs-Proxy-Server 8C im Schritt S10 einen Mobilitätsschlüssel zur kryptographischen Sicherung von Mobilitätssicherungsnachrichten zur Verfügung. Der Authentisierungs-Proxy-Server 8C überträgt den bereitgestellten Mobilitätsschlüssel an den Heimagenten 8B. Vorzugsweise wird der Mobilitätsschlüssel auch an einen Authentisierungs-Client-Server 6D des Zugangsnetzes 4 übertragen. Der Vorgang endet im Schritt S11.

Der im Schritt S10 bereitgestellte Mobilitätsschlüssel wird bei einer ersten Ausführungsform des erfindungsgemäßen Verfahrens durch den Authentisierungs-Proxy-Server 8C zufällig generiert.

Bei einer alternativen Ausführungsform wird der Mobilitätsschlüssel (MIP-Schlüssel) durch den Authentisierungs-Proxy-Server 8C aus einem MSK (Master Session Key)-Schlüssel abgeleitet, den der Authentisierungs-Proxy-Server 8C von dem Authentisierungsserver 11 an das Zugangsnetz 4 weitergeleitet hat. Dabei kann der MIP-Schlüssel aus dem MSK-Schlüssel gemäß einer beliebigen Schlüsselableitungsfunktion abgeleitet werden, beispielsweise mittels einer Hash-Funktion. Die Hash-Funktion reduziert Daten beliebiger Größe auf einen so genannten Fingerabdruck. Ein Beispiel für eine derartige Hash-Funktion stellt SHA-1 dar. Dabei werden Daten von maximal 2⁶⁴ Bits auf 160 Bit abgebildet. Eine alternative Hash-Funktion ist MD5. MD5 teilt wie SHA-1 die Eingabe in Blöcke der Größe 500 Bit ein und erzeugt Hash-Werte von 128 Bit Größe.

Bei einer alternativen Ausführungsform wird der zur Verfügung gestellte Mobilitätsschlüssel durch einen Teil des von dem Authentisierungs-Proxy-Server 8C empfangenen MSK-Schlüssels 12 gebildet.

In einer weiteren alternativen Ausführungsform ist der bereitgestellte Mobilitätsschlüssel mit dem übertragenen MSK-Schlüssel identisch.

Die Authentisierungsnachrichten werden bei bevorzugten Ausführungsformen gemäß dem Radius- oder dem Diameter-Protokoll übertragen.

Bei dem erfindungsgemäßen Verfahren bietet das Zwischennetz 9 die Home-MIP-Funktionalität an, falls diese durch das Heimnetz 12 nicht unterstützt wird. Dadurch ist es möglich auch bei Heimnetzen, die kein MIP unterstützen, beispielsweise bei 3GPP-Netzen, Makromobilität basierend auf MIP zu ermöglichen. MIP wird innerhalb des Zugangsnetzes 4 und des Zwischennetzes 9 verwendet, um einen Handover zwischen verschiedenen Zugangsnetzen 4 zu realisieren. Bei der MIP-Registrierung des Fremdagenten 6A fragt der Heimagent 8B des Zwischennetzes 9 den Mobilitätsschlüssel von dem zugehörigen Authentisierungs-Proxy-Server 8C ab. Er verwendet dabei die entsprechende Teilnehmeridentität, d.h. beispielsweise eine Netzwerkzugangsidentifizierung NAI (Network Access Identifier) oder die Heimadresse des mobilen Endgerätes 1. Diese Schlüsselanfragenachricht wird durch den Authentisierungs-Proxy-Server 8C lokal beantwortet, fall ein entsprechender Datensatz angelegt ist. Damit der Authentisierungs-Proxy-Server 8C den jeweiligen Schlüssel zur Verfügung stellen kann, ist er derart ausgelegt, dass er die Nachrichten interpretiert, die zwischen dem Authentisierungsserver 11 des Heimnetzes 12 und einem Authentikator im Zugangsnetz 4 während der Authentifizierung des mobilen Endgerätes 1 ausgetauscht werden.

Der Heimagent 8B befindet sich vorzugsweise, wie in Figur 5 dargestellt in dem Zwischennetz 9. Bei einer alternativen Ausführungsform liegt der Heimagent 8B in dem Heimnetz 12.

Bei einer alternativen Ausführungsform des erfindungsgemäßen Verfahrens wird als mobile IP-Funktionalität Mobile-IPV6 [RFC3775] verwendet.

Bei einer bevorzugten Ausführungsform des erfindungsgemäßen Verfahrens wird der Mobilitätsschlüssel durch den Heimagenten 8B nur einmalig mittels einer Schlüsselanfragenachricht von dem Authentisierungs-Proxy-Server 8C abgefragt.

Mit dem erfindungsgemäßen Verfahren wird die Verwendung von Legacy-AAA-Servern, wie beispielsweise WLAN oder 3GPP-Servern für WiMax-Netze ermöglicht, obwohl diese Server die von WiMax-Netzen erwartete CMIP/PMIP-Funktionalität nicht bereitstellen. Mit dem erfindungsgemäßen Verfahren ist trotz der Verwendung von Legacy-AAA-Servern im Heimnetz 12 eine PMIPbasierte Makromobilität möglich. Ein Netzbetreiber von einem WLAN oder 3GPP-Netz muss daher PMIP generell nicht selbst unterstützen und kann dennoch seinen Kunden ein Roaming/- Interworking mit WiMax-Funknetzen ermöglichen. Mit dem erfindungsgemäßen Verfahren ist es insbesondere möglich, mit der PMIP-Unterstützung auch Endgeräten ohne Unterstützung von Mobile-IP WiMax Interworking zu erlauben. Insbesondere ermöglicht das erfindungsgemäße Verfahren ein WiMax-3GPP-Interworking analog dem derzeit spezifizierten WLAN-direct-IP-Access.

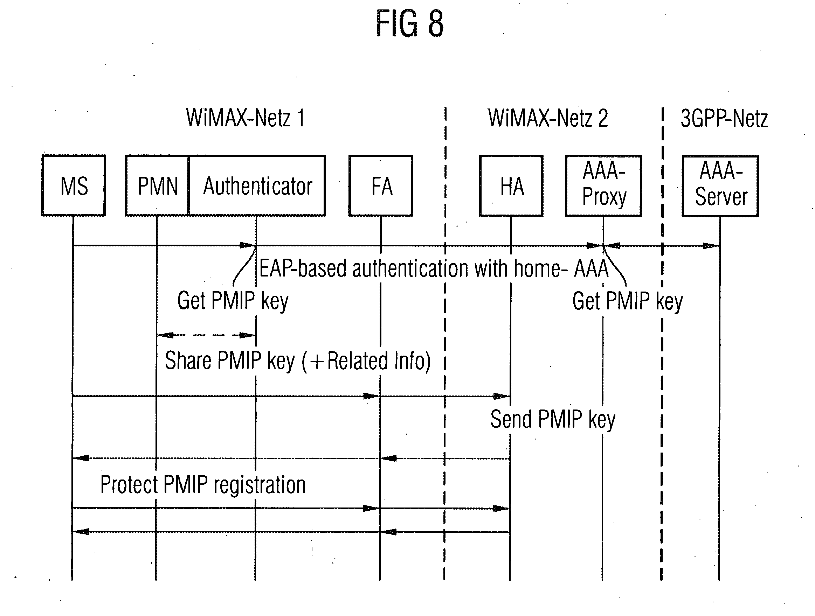

Figur 8 zeigt ein Nachrichtenflussdiagramm einer bevorzugten Ausführungsform des erfindungsgemäßen Verfahrens. Wenn während der Zugangsauthentisierung der Authentisierungsserver des Heimnetzes, beispielsweise eines 3GPP-Netzes, keine Heimagentenadresse liefert, dann setzt der Authentisierungsserver des besuchten Netzes die Heimadresse für den Heimagenten des Zwischennetzes an und legt einen Zustand an für die spätere Abfrage des Mobilitätsschlüssels durch den Heimagenten 8B des Zwischennetzes. Die Zustandsdaten enthalten eine Teilnehmeridentität. Die in Figur 4 dargestellten Schritte 16b, 17a, d.h. die Abfrage des Mobilitätsschlüssels durch den Heimagenten 8B an den Authentisierungsserver 11 des Heimnetzes 12 und die zugehörige Antwort entfallen bei dem erfindungsgemäßen Verfahren. Die Schlüsselanfragenachricht, die die Teilnehmeridentität enthält, wird bei dem erfindungsgemäßen Verfahren durch den Authentisierungs-Proxy-Server 8C des Zwischennetzes 9 beantwortet. Das erfindungsgemäße Verfahren ermöglicht somit ein Makromobilitätsmanagement in WiMax-Netzen ohne Heimnetzunterstützung.

## Patentansprüche

1. Verfahren zum Bereitstellen mindestens eines Mobilitätsschlüssels zur kryptographischen Sicherung von Mobilitätssignalisierungsnachrichten für einen Heimagenten mit den folgenden Schritten:
(a) Aufbauen einer Funkverbindung zwischen einem mobilen Teilnehmer-Endgerät (1) und einem Zugangsnetz (4),
wobei ein Authentisierungs-Proxy-Server (8C) eines Zwischennetzes (9) zur Authentisierung eines Teilnehmers mindestens eine Authentisierungsnachricht, die eine Teilnehmeridentität enthält, zwischen dem Zugangsnetz (4) und einem Heimnetz (12) des Teilnehmers weiterleitet und bei erfolgreicher Authentisierung durch einen Authentisierungsserver (11) des Heimnetzes (12) die Teilnehmeridentität jeweils speichert;
(b) Empfangen einer von einem mobilen Teilnehmerendgerät (1) stammenden Registrierungsanfragenachricht, die eine Teilnehmeridentität enthält, durch einen Heimagenten (8B);
(c) Senden einer Schlüsselanfragenachricht für einen Mobilitätsschlüssel von dem Heimagenten (8B) an den zugehörigen Authentisierungs-Proxy-Server (8C);
wobei die Schlüsselanfragenachricht die in der Registrierungsanfragenachricht enthaltene Teilnehmeridentität enthält; und
(d) Bereitstellen eines Mobilitätsschlüssels durch den Authentisierungs-Proxy-Server (8C) für den Heimagenten (8B), wenn die in der Schlüsselanfragenachricht enthaltene Teilnehmeridentität mit einer der durch den Authentisierungs-Proxy-Server (8C) gespeicherten Teilnehmeridentitäten übereinstimmt.

2. Verfahren nach Anspruch 1,
wobei der Mobilitätsschlüssel durch den Authentisierungs-Proxy-Server (8C) zufällig generiert wird.

3. Verfahren nach Anspruch 1,
wobei der Authentisierungsserver (11) des Heimnetzes (12) bei erfolgreicher Authentisierung einen in einer Authentisierungsnachricht enthaltenen MSK-Schlüssel über den Authentisierungs-Proxy-Server (8C) zu einem Authentisierungs-Client (6C) des Zugangsnetzes (4) überträgt.

4. Verfahren nach Anspruch 3,
wobei der Mobilitätsschlüssel durch den Authentisierungs-Proxy-Server (8C) aus dem übertragenen MSK-Schlüssel abgeleitet wird.

5. Verfahren nach Anspruch 4,
wobei der Mobilitätsschlüssel einen Teil des übertragenen MSK-Schlüssels bildet.

6. Verfahren nach Anspruch 4,
wobei der Mobilitätsschlüssel mit dem übertragenen MSK-Schlüssel identisch ist.

7. Verfahren nach Anspruch 4,
wobei der Mobilitätsschlüssel durch eine kryptographische Schlüsselableitungsfunktion oder durch eine kryptographische Hash-Funktion abgeleitet wird.

8. Verfahren nach Anspruch 1,
wobei die Authentisierungsnachrichten nach einem RADIUS-Datenübertragungsprotokoll übertragen werden.

9. Verfahren nach Anspruch 1,
wobei die Authentisierungsnachrichten nach einem Diameter-Datenübertragungsprotokoll übertragen werden.

10. Verfahren nach Anspruch 1,
wobei das Zugangsnetz (4) durch ein WIMAX-Zugangsnetz (ASN) gebildet wird.

11. Verfahren nach Anspruch 1,
wobei das Zwischennetz (9) durch ein WIMAX-Zwischennetz (CSN) gebildet wird.

12. Verfahren nach Anspruch 1,
wobei das Heimnetz (12) durch ein 3GPP-Netz gebildet wird.

13. Verfahren nach Anspruch 1,
wobei das Heimnetz durch ein WLAN-Netz gebildet wird.

14. Verfahren nach Anspruch 1,
wobei die Teilnehmeridentität durch einen Netzwerkzugangsidentifizierer NAI gebildet wird.

15. Verfahren nach Anspruch 1,
wobei die Teilnehmeridentität durch eine Heimadresse des Teilnehmers gebildet wird.

16. Verfahren nach Anspruch 1,
wobei der Mobilitätsschlüssel zusätzlich einem PMIP-Client (6B) des Zugangsnetzes (4) bereitgestellt wird.

17. Verfahren nach Anspruch 1,
wobei mehrere Zwischennetze (9) zwischen dem Zugangsnetz (4) und dem Heimnetz (12) liegen.

18. Verfahren nach Anspruch 17,
wobei der Heimagent (8B) in dem Heimnetz (12) oder in einem der Zwischennetze (9) vorgesehen ist.

19. Verfahren nach Anspruch 17,
wobei der Authentisierungs-Proxy-Server (8C) in dem Heimnetz (12) oder in einem der Zwischennetze (9) vorgesehen ist.

20. Authentisierungs-Proxy-Server (8C) zum Bereitstellen eines Mobilitätsschlüssels für eine kryptographische Sicherung von Mobilitätssignalisierungsnachrichten,
wobei der Authentisierungs-Proxy-Server (8C) derartig ausgebildet ist, sodass er nach erfolgreicher Authentisierung eines Teilnehmers jeweils dessen Teilnehmeridentität speichert und nach Empfang einer Schlüsselanfragenachricht für einen Mobilitätsschlüssel von einem Heimagenten (8B) einen Mobilitätsschlüssel bereitstellt, wenn eine in der Schlüsselanfragenachricht enthaltene Teilnehmeridentität mit einer der gespeicherten Teilnehmeridentitäten übereinstimmt.

21. Authentisierungs-Proxy-Server nach Anspruch 20,
wobei der Authentisierungs-Proxy-Server (8C) derartig ausgebildet ist, sodass er den Mobilitätsschlüssel zufällig generiert.

22. Authentisierungs-Proxy-Server nach Anspruch 20,
wobei der Authentisierungs-Proxy-Server (8C) derartig ausgebildet ist, sodass er mit einem Authentisierungsserver (11) eines Heimnetzes (12) verbunden ist.

23. Authentisierungs-Proxy-Server nach Anspruch 20,
wobei der Authentisierungs-Proxy-Server (8C) derartig ausgebildet ist, sodass er den Mobilitätsschlüssel von einem durch den Authentisierungsserver (11) des Heimnetzes (12) abgegebenen MSK-Schlüssel ableitet.

24. Authentisierungs-Proxy-Server nach Anspruch 20,
wobei das Heimnetz (12) ein 3GPP-Netz ist.

25. Authentisierungs-Proxy-Server nach Anspruch 20,
wobei das Heimnetz (12) ein WLAN-Netz ist.

26. Authentisierungs-Proxy-Server nach Anspruch 20,
wobei der Authentisierungs-Proxy-Server (8C) ein WIMAX-Authentisierungs-Proxy-Server ist.

## Claims

1. Method for the preparation of at least one mobility key for cryptographic securing of mobility signalling messages for a home agent, with the following steps:
a) Construction of a radio connection between a mobile subscriber end device (1) and an access network (4), with an authentication proxy server (8C) of an intermediate network (9) forwarding at least one authentication message containing a subscriber identity between the access network (4) and a home network (12) of the subscriber to authenticate a subscriber, and saves the subscriber identity in each case of successful authentication by an authentication server (11) of the home network (12);
b) Reception of a registration request message originating from a mobile subscriber end device (1) and containing a subscriber identity by a home agent (8B);
c) Sending of a key request message for a mobility key by the home agent (8B) to the associated authentication proxy server (8C);
with the key request message containing the subscriber identity contained in the registration request message; and
d) Preparation of a mobility key by the authentication proxy server (8C) for the home agents (8B), if the subscriber identity contained in the key request message is consistent with one of the subscriber identities saved by the authentication proxy server (8C).

2. Method according to claim 1,
with the mobility key being generated at random by the authentication proxy server (8C).

3. Method according to claim 1,
with, upon successful authentication, the authentication server (11) of the home network (12) transmitting an MSK key contained in an authentication message via the authentication proxy server (8C) to an authentication client (6C) of the access network (4).

4. Method according to claim 3,
with the mobility key being derived from the transmitted MSK key by the authentication proxy server (8C).

5. Method according to claim 4,
with the mobility key forming part of the transmitted MSK key.

6. Method according to claim 4,
with the mobility key being identical to the transmitted MSK key.

7. Method according to claim 4,
with the mobility key being derived by a cryptographic key derivation function or by a cryptographic hash function.

8. Method according to claim 1,
with the authentication messages being transmitted according to a RADIUS data transmission protocol.

9. Method according to claim 1,
with the authentication messages being transmitted according to a diameter data transmission protocol.

10. Method according to claim 1,
with the access network (4) being formed by a WIMAX access network (ASN).

11. Method according to claim 1,
with the intermediate network (9) being formed by a WIMAX intermediate network (CSN).

12. Method according to claim 1,
with the home network (12) being formed by 3GPP network.

13. Method according to claim 1,
with the home network being formed by a WLAN network.

14. Method according to claim 1,
with the subscriber identity being formed by a network access identifier NAI.

15. Method according to claim 1,
with the subscriber identity being formed by a home address of the subscriber.

16. Method according to claim 1,
with the mobility key additionally being provided to a PMIP client (6B) of the access network (4).

17. Method according to claim 1,
with several intermediate networks (9) being located between the access network (4) and the home network (12).

18. Method according to claim 17,
with the home agent (8B) being arranged in the home network (12) or in one of the intermediate networks (9).

19. Method according to claim 17,
with the authentication proxy server (8C) being arranged in the home network (12) or in one of the intermediate networks (9).

20. Authentication proxy server (8C) for the preparation of a mobility key for a cryptographic securing of mobility signalling messages,
with, after successful authentication of a subscriber, the authentication proxy server (8C) being embodied such that it saves the subscriber identity in question and, after reception of a key request message for a mobility key from a home agent (8B), prepares a mobility key, if a subscriber identity contained in the key request message is consistent with one of the saved subscriber identities.

21. Authentication proxy server according to claim 20,
with the authentication proxy server (8C) being embodied such that it generates the mobility key at random.

22. Authentication proxy server according to claim 20,
with the authentication proxy server (8C) being embodied such that it is connected to an authentication server (11) of a home network (12).

23. Authentication proxy server according to claim 20,
with the authentication proxy server (8C) being embodied such that it derives the mobility key from one of the MSK keys given by the authentication server (11) of the home network (12).

24. Authentication proxy server according to claim 20,
with the home network (12) being a 3GPP network.

25. Authentication proxy server according to claim 20,
with the home network (12) being a WLAN network.

26. Authentication proxy server according to claim 20,
with the authentication proxy server (8C) being a WIMAX authentication proxy server.

## Revendications

1. Procédé pour la fourniture d'au moins une clé de mobilité pour la protection cryptographique de messages de signalisation de mobilité pour un agent domestique, comprenant les étapes suivantes :
(a) établissement d'une liaison radio entre un terminal d'abonné mobile (1) et un réseau d'accès (4), un serveur proxy d'authentification (8C) d'un réseau intermédiaire (9) transmettant, pour l'authentification d'un abonné, au moins un message d'authentification qui contient une identité d'abonné entre le réseau d'accès (4) et un réseau domestique (12) de l'abonné, et mémorisant l'identité d'abonné à chaque fois qu'un serveur d'authentification (11) du réseau domestique (12) réussit l'authentification ;
(b) réception par un agent domestique (8B) d'un message de demande d'enregistrement, qui contient une identité d'abonné, provenant d'un terminal d'abonné mobile (1) ;
(c) envoi par l'agent domestique (8B) d'un message de demande de clé pour une clé de mobilité adressé au serveur proxy d'authentification correspondant (8C) ; le message de demande de clé contenant l'identité d'abonné contenue dans le message de demande d'enregistrement; et
(d) fourniture d'une clé de mobilité par le serveur proxy d'authentification (8C) pour l'agent domestique (8B) lorsque l'identité d'abonné contenue dans le message de demande de clé coïncide avec l'une des identités d'abonné mémorisées par le serveur proxy d'authentification (8C).

2. Procédé selon la revendication 1, la clé de mobilité étant générée de façon aléatoire par le serveur proxy d'authentification (8C).

3. Procédé selon la revendication 1, le serveur d'authentification (11) du réseau domestique (12) transmettant, en cas d'authentification réussie, une clé MSK contenue dans un message d'authentification à un client d'authentification (6C) du réseau d'accès (4) par le biais du serveur proxy d'authentification (8C).

4. Procédé selon la revendication 3, la clé de mobilité étant dérivée par le serveur proxy d'authentification (8C) à partir de la clé MSK transmise.

5. Procédé selon la revendication 4, la clé de mobilité formant une partie de la clé MSK transmise.

6. Procédé selon la revendication 4, la clé de mobilité étant identique à la clé MSK transmise.

7. Procédé selon la revendication 4, la clé de mobilité étant dérivée grâce à une fonction de dérivation de clé cryptographique ou grâce à une fonction de hash cryptographique.

8. Procédé selon la revendication 1, les messages d'authentification étant transmis selon un protocole de transmission de données RADIUS.

9. Procédé selon la revendication 1, les messages d'authentification étant transmis selon un protocole de transmission de données Diameter.

10. Procédé selon la revendication 1, le réseau d'accès (4) étant formé par un réseau d'accès WIMAX (ASN).

11. Procédé selon la revendication 1, le réseau intermédiaire (9) étant formé par un réseau intermédiaire WIMAX (CSN).

12. Procédé selon la revendication 1, le réseau domestique (12) étant formé par un réseau 3GPP.

13. Procédé selon la revendication 1, le réseau domestique étant formé par un réseau WLAN.

14. Procédé selon la revendication 1, l'identité d'abonné étant formée par un identifiant d'accès au réseau NAI.

15. Procédé selon la revendication 1, l'identité d'abonné étant formée par une adresse de domicile de l'abonné.

16. Procédé selon la revendication 1, la clé de mobilité étant fournie, en plus, à un client PMIP (6B) du réseau d'accès (4).

17. Procédé selon la revendication 1, plusieurs réseaux intermédiaires (9) se trouvant entre le réseau d'accès (4) et le réseau domestique (12).

18. Procédé selon la revendication 17, l'agent domestique (8B) étant prévu dans le réseau domestique (12) ou dans l'un des réseaux intermédiaires (9).

19. Procédé selon la revendication 17, le serveur proxy d'authentification (8C) étant prévu dans le réseau domestique (12) ou dans l'un des réseaux intermédiaires (9).

20. Serveur proxy d'authentification (8C) pour la fourniture d'une clé de mobilité pour une protection cryptographique de messages de signalisation de mobilité,
le serveur proxy d'authentification (8C) étant exécuté de manière à mémoriser l'identité d'abonné d'un abonné à chaque fois que son authentification est réussie et à fournir une clé de mobilité, après la réception par un agent domestique (8B) d'un message de demande de clé pour une clé de mobilité, lorsqu'une identité d'abonné contenue dans le message de demande de clé coïncide avec l'une des identités d'abonné mémorisées.

21. Serveur proxy d'authentification selon la revendication 20, le serveur proxy d'authentification (8C) étant exécuté de manière à générer la clé de mobilité de façon aléatoire.

22. Serveur proxy d'authentification selon la revendication 20, le serveur proxy d'authentification (8C) étant exécuté de manière à être relié à un serveur d'authentification (11) d'un réseau domestique (12).

23. Serveur proxy d'authentification selon la revendication 20, le serveur proxy d'authentification (8C) étant exécuté de manière à dériver la clé de mobilité d'une clé MSK fournie par le serveur d'authentification (11) du réseau domestique (12).

24. Serveur proxy d'authentification selon la revendication 20, le réseau domestique (12) étant un réseau 3GPP.

25. Serveur proxy d'authentification selon la revendication 20, le réseau domestique (12) étant un réseau WLAN.

26. Serveur proxy d'authentification selon la revendication 20, le serveur proxy d'authentification (8C) étant un serveur proxy d'authentification WIMAX.
